# EUROPEAN PATENT SPECIFICATION

(11) **EP 4 320 431 B1**
(45) Date of publication and mention of the grant of the patent: **06.05.2026**
(21) Application number: 22722176.9
(22) Date of filing: 08.04.2022
(51) Int. Cl.: G01N 27/414, B82Y 15/00

(54) **FIELD-EFFECT TRANSISTOR COMPRISING MIXED FUNCTIONALIZED GRAPHENE STRUCTURE AND CORRESPONDING FABRICATION METHOD**
FELD-EFFEKT-TRANSISTOR MIT GEMISCHT FUNKTIONALISIERTER GRAPHENSTRUKTUR UND ENTSPRECHENDES HERSTELLUNGSVERFAHREN
TRANSISTOR À EFFET DE CHAMP COMPRENANT UNE STRUCTURE EN GRAPHÈNE À FONCTIONNALISATION MIXTE ET PROCÉDÉ DE FABRICATION CORRESPONDANT

(30) Priority: 08.04.2021 EP 21382300
(43) Date of publication of application: 14.02.2024
(73) Proprietor: AttenBio S.L., 20014 Donostia-San Sebastián (ES)
(72) Inventor: REBOLLO PIÑEIRO, Amaia, 20014 Donostia - San Sebastián (ES); ARRASTUA CEBERIO, María, 20014 Donostia - San Sebastián (ES)
(74) Representative: Balder IP Law, S.L.
(86) International application number: PCT/EP2022/059542
(87) International publication number: WO 2022/214698

(56) References cited:
- US-A1- 2016 036 061
- MIKI HIROKO ET AL: "Ionic Liquids With Wafer-Scalable Graphene Sensors for Biological Detection", IEEE TRANSACTIONS ON NANOBIOSCIENCE, IEEE SERVICE CENTER, PISCATAWAY, NY, US, vol. 18, no. 2, 15 March 2019 (2019-03-15), pages 216 - 219, XP011721484, ISSN: 1536-1241, [retrieved on 20190423], DOI: 10.1109/TNB.2019.2905286
- YASUHIDE OHNO ET AL: "Label-Free Aptamer-Based Immunoglobulin Sensors Using Graphene Field-Effect Transistors", JAPANESE JOURNAL OF APPLIED PHYSICS, vol. 50, no. 7, 20 July 2011 (2011-07-20), JP, pages 070120, XP055404801, ISSN: 0021-4922, DOI: 10.1143/JJAP.50.070120
- ZHOU LIN ET AL: "Label-free graphene biosensor targeting cancer molecules based on non-covalent modification", BIOSENSORS AND BIOELECTRONICS, vol. 87, 8 September 2016 (2016-09-08), Amsterdam , NL, pages 701 - 707, XP055846510, ISSN: 0956-5663, DOI: 10.1016/j.bios.2016.09.025
- ZHOU LIN ET AL: "Supplementary Material: Label-free graphene biosensor targeting cancer molecules based on non-covalent modification", 8 September 2016 (2016-09-08), XP055947818, Retrieved from the Internet <URL:https://ars.els-cdn.com/content/image/1-s2.0-S0956566316308971-mmc1.pdf> [retrieved on 20220801]
- DE ALMEIDA PEDRO RODRIGUES ET AL: "Development of a Graphene-Based Biosensor for Detecting Recombinant Cyanovirin-N", BIOSENSORS, vol. 10, no. 12, 16 December 2020 (2020-12-16), pages 206, XP055846661, DOI: 10.3390/bios10120206
- ALI DÜZGÜN ET AL: "Nanostructured materials in potentiometry", ANALYTICAL AND BIOANALYTICAL CHEMISTRY, SPRINGER, BERLIN, DE, vol. 399, no. 1, 14 July 2010 (2010-07-14), pages 171 - 181, XP019869684, ISSN: 1618-2650, DOI: 10.1007/S00216-010-3974-3
- ASPERMAIR PATRIK ET AL: "Reduced graphene oxide-based field effect transistors for the detection of E7 protein of human papillomavirus in saliva", ANALYTICAL AND BIOANALYTICAL CHEMISTRY, vol. 413, no. 3, 20 August 2020 (2020-08-20), pages 779 - 787, XP037336743, ISSN: 1618-2642, DOI: 10.1007/S00216-020-02879-Z

## Description

### TECHNICAL FIELD OF THE INVENTION

The present invention relates to a Field-Effect Transistor chip comprising a mixed functionalized graphene structure as well as the method for preparing it and to its use. Additionally, the present invention relates to a biosensor comprising said mixed functionalized graphene structure and to a method for electronic analysis of biological samples.

### BACKGROUND OF THE INVENTION

The immobilization of biomolecules on a surface is a key factor in the functionalization process for the development of biosensors. The orientation is very critical for a good recognition event with the target molecule, and the specific orientation of immobilized biomolecules is not easily achieved. However, it is essential to immobilize biomolecules on surfaces without altering their binding activity, specificity and chemical structure.

Different strategies for immobilization may result in specific or random orientation of the biomolecules. The orientation on shelf-organizing capacity of the biomolecules may be steered by specific reactive groups on the surface, on biomolecules or on both.

Graphene Field Effect Transistors (GFETs) are transistors based on graphene and work based on the modulation of the graphene channel conductance between the source and the drain upon the application of an external electric field through the gate electrode. This graphene channel has revolutionary sensitivity thanks to the thickness of only one atom, which can be exploited on a wide variety of applications such as biosensing (Y. M. Lei et al., Biosens. Bioelectron. 2017, 91, 1-7; L. Zhou et al., Biosens. Bioelectron. 2017, 87, 701-707).

Graphene is a two-dimensional material, mono-atomic, planar network of sp²-bonded carbon atoms arranged in a honeycomb lattice. However, its chemical stability, biocompatibility, significant surface-to-volume ratio and field effect make this material very attractive for biosensing applications ("Biocompatible graphene for bioanalytical applications". Y. Hu et al. Springer, 2015). This significant surface-to-volume ratio plays a key role for chemical immobilization of biomolecules onto its surface via covalent or non-covalent functionalization procedures.

The covalent functionalization results in stable products, but involves the saturation of some of the double bonds affecting the electronic properties of graphene (WO 2008/097343A2 A2).

The non-covalent functionalization allows its solubilization while preserving the structural and electronic features (N. Kozhemyakina et al., Advanced Mater. 2010, 22, 5483-7). PBASE molecules are commonly used as a conventional method to functionalize graphene as non-covalent method, and it is widely studied in many publications (e.g., US 2017/0081195 A1).

This chemical modification of graphene with different electroactive molecules through non-covalent interactions, specifically π-π stacking, is widely investigated due to the preservation of the π-conjugated system of graphene. For that reason, it is not strange that a vast majority of the examples related with the non-covalent functionalization of graphene employ planar aromatic molecules and their derivatives. For instance, pyrene derivatives are known to feature strong affinities towards the graphene basal plane via π-π stacking (US 2014/0147938 A1).

De Almeida et al., Development of a Graphene-Based Biosensor for Detecting Recombinant Cyanovirin-N. Biosensors. 2020; 10(12):206 discloses a graphene-based biosensor selective to an antiviral protein. The graphene monolayer devices are modified with 1-pyrenebutanoic acid succinimidyl ester. Tween-20 is used to passivate the uncoated graphene surface.

In spite of the above-discussed functionalization methods, there remains a need for more controlled and efficient means of preparing chemically modified graphene surface, whilst simultaneously preserving its interesting and desirable properties for exploitation in biosensor applications.

### BRIEF DESCRIPTION OF THE INVENTION

The inventors of the present invention have developed a mixed functionalization of graphene that causes a better interaction of biomolecules to the functionalized graphene surface.

A method for preparing a Field-Effect Transistor (FET) chip comprising a mixed functionalized graphene structure is defined in claim 1.

A FET chip comprising a mixed functionalized graphene structure obtainable by the method is defined in claim 5.

This mixed non-covalent functionalization of graphene results in a specific packing wherein the PAH molecules establish π-π stacking with graphene surface and PBASE molecules are more packed and organized to biomolecules which will react covalently with the ester groups of PBASE molecules adopting more suitable conformations at their binding sites for their target recognition in biosensors.

The method as described in claim 1 allows a more controlled and efficient means of preparing chemically modified graphene surfaces.

The chemical functionalization of graphene surface is improved by the method as described in claim 1.

As a result, the biomolecules adopt favourable distance and conformation at their binding sites which are more suitable for their target recognition in biosensors.

Another aspect of the present invention relates to an electronic device for biological sample analysis, characterized in that it comprises the FET chip as defined herein as component.

Another aspect of the present invention relates to a method for electronic biological sample analysis, comprising:
a) introducing a biological sample to be analyzed in a device as defined herein to bring the biological sample in contact with the mixed functionalized graphene structure comprised in said device;
b) applying a voltage to the device; and
c) detecting a change of the conductive properties of the mixed functionalized graphene structure resulting in a change of the electric signal of the said device.

A final aspect of the present invention relates to the use of the mixed functionalized graphene structure as described herein in FET biosensors.

These and other aspects of the invention will be apparent from and elucidated with reference to the embodiments described hereinafter.

### BRIEF DESCRIPTION OF THE DRAWINGS

To better understand the invention, its objects and advantages, the following figures are attached to the specification in which the following is depicted:
Figure 1. Schematic representation of non-covalent mixed functionalization of graphene surface and follow biofunctionalization with biomolecules (antibodies in this case) on a graphene transistor.
Figure 2. AFM images of (a) bare substrate, 10 x 10 µm² area, and (b) chip n° 10, 10 x 10 µm² area, of Table 2.
Figure 3. AFM images of (a) chip n° 11, 10 x 10 µm² area, and (b) chip n° 12, 10 x 10 µm² area, of Table 2.
Figure 4. AFM images of (a) chip n° 13, 10 x 10 µm² area, and (b) chip n° 1, 10 x 10 µm² area, of Table 2.
Figure 5. AFM images of chip n° 2, 10 x 10 µm² area, of Table 2.
Figure 6. AFM images of chip 16 (graphene + PBASE + antibody) wherein the image size is (a) 5x5 µm² and (b) 2x2 µm².
Figure 7. AFM images of chip 17 (graphene + PBASE + pyrene + antibody) wherein the image size is (a) 5x5 µm² and (b) 2x2 µm².
Figure 8. N1s high resolution graphs for (a) chip 11 (bare graphene), (b) chip 14 (graphene + PBASE), (c) chip 13 (graphene + PBASE), (d) chip 18 (graphene + PBASE + pyrene (sequentially)), (e) chip 17 (graphene + PBASE + pyrene (sequentially) + Ab), (f) chip 20 (graphene + PBASE + pyrene (simultaneously)), (g) chip 19 (graphene + PBASE + pyrene (simultaneously) + Ab).
Figure 9. Gate voltage value (Dirac Point) comparison between bare graphene and after PBASE functionalization and antibody immobilization. Average Gate Voltage difference: 0.12 V±0.05.
Figure 10. Gate voltage value (Dirac Point) comparison between bare graphene and after mixed functionalization and antibody immobilization. Average Gate Voltage difference: 0.1 V±0.01.

### DETAILED DESCRIPTION OF THE INVENTION

Unless defined otherwise, all technical and scientific terms used herein have the same meaning as commonly understood to one of ordinary skill in the art to which this disclosure belongs.

### Mixed functionalized graphene structure

It is an object of the present invention to provide a mixed functionalized graphene structure, wherein biomolecules present a more suitable orientation and conformation for their target recognition.

In particular, the mixed functionalized graphene structure of the present invention comprises a graphene surface.

The term "graphene" will be understood to refer to a particular crystalline allotrope of carbon consisting of a single layer of atoms arranged in a two-dimensional honeycomb lattice and wherein each carbon atom is connected to three adjacent carbon atoms (sp² hybridization), so as to define a one atom thick planar sheet of carbon.

For the avoidance of doubt, the term graphene used herein does not encompass graphene oxide.

Therefore, in the present invention, the term "graphene structure" will be understood to refer to a two-dimensional carbon structure with up to ten graphene layers, wherein each layer (or sheet) of carbon is one atom thick.

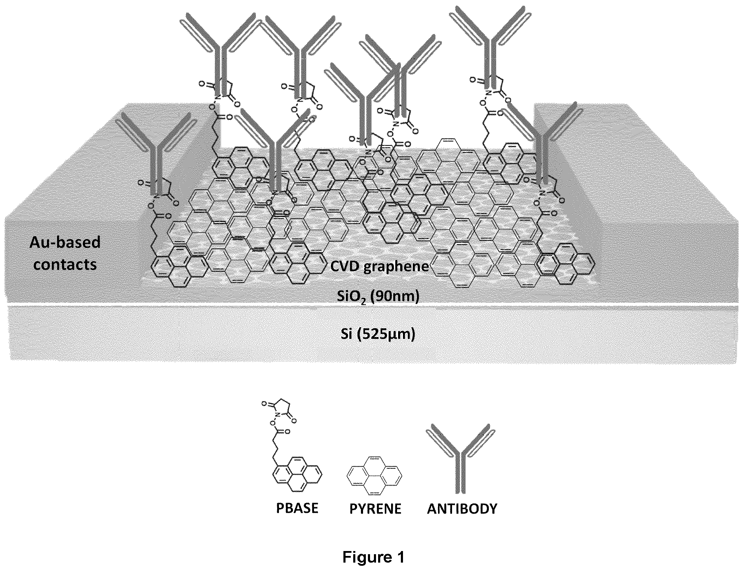

In a particular embodiment, the term "graphene structure" refers to a graphene layer supported in a chip made of an insulator material such as silicon dioxide, by using, for example, chemical vapour deposition (CVD). Then, the graphene surface in the graphene structure is functionalized as it is described herein, in order to obtain the functionalized graphene structure of the present invention. A non-limiting example of a functionalized graphene structure according to the present invention is shown in Figure 1.

A mixed functionalized graphene structure as described herein further comprises 1-pyrenebutanoic acid succinimidyl ester (PBASE) molecules and molecules of polycyclic aromatic hydrocarbon (PAH) compounds, the PAH compound being pyrene; wherein both the molecules of PBASE and the molecules of at least one type of PAH compounds are non-covalently linked to the graphene surface.

The 1-pyrenebutanoic acid succinimidyl ester (PBASE) is a heterobifunctional linker that contains on one hand a pyrene group, that stacks with graphene by π-π stacking, creating a non-covalent monolayer on graphene surface with a high surface coverage and, furthermore, an N-hydroxysuccinimide (NHS) ester group, that reacts with primary amines present on a plurality of biomolecules.

The polycyclic aromatic hydrocarbon (PAH) compounds, also known as polyaromatic hydrocarbons or polynuclear aromatic hydrocarbons, are chemical compounds containing only carbon and hydrogen and composed of multiple aromatic rings. The simplest of such chemicals are naphthalene, having two aromatic rings, and the three-ring compounds anthracene and phenanthrene. PAH compounds molecules establish π-π stacking with graphene surface.

The mixed functionalized graphene structure comprises molecules of at least one type of PAH compound.

The PAH compound being pyrene.

In another particular embodiment, the molecules of PAH compounds are of one type.

This mixed non-covalent functionalization of graphene results in a specific packing, wherein the PAH molecules establish π-π stacking with graphene surface, and PBASE molecules are more packed and organized to biomolecules, which will react covalently with the ester groups of PBASE molecules adopting more suitable conformations at their binding sites their target recognition in biosensors.

Thus, a mixed functionalized graphene structure as described herein further comprises biomolecules.

In a mixed functionalized graphene structure as described herein, the biomolecules are linked through the ester groups of PBASE molecules. The inventors of the present invention have observed that biomolecules are linked to the PBASE molecules with the ester groups in more ordered and packed way compared to functionalized graphene structures disclosed in the prior art, minimizing the steric hindrance and adopting vertical orientations at their binding sites which are more suitable conformations for their target recognition (such as pathogens) in biosensors.

In the context of the present invention, the term "biomolecules" refer to the recognition component in a biosensor, often called a bioreceptor, and includes biomolecules from organisms, but also receptors modelled after biological systems to interact with the analyte of interest.

Non-limiting examples of suitable biomolecules for the functionalized graphene structure as described herein are antibodies, aptamers, oligonucleotides and enzymes.

In a particular embodiment, the biomolecules comprised in a functionalized graphene structure as described herein are antibodies.

A non-limiting example of a suitable antibody for the functionalized graphene structure as described herein is SARS-CoV-2 spike antibody.

The mixed functionalized graphene structure as described herein has a surface roughness (Rms) between around 0.01±1.00 nm and around 0.25±1.00 nm respect to a surface roughness (Rms) of non-functionalized graphene, wherein Rms is measured by atomic force microscopy (AFM).

The term "roughness" or "surface roughness" is a characteristic of a material related to the surface texture of said material and it is quantified by the deviations in the direction of the normal vector of a real surface from its ideal form. If these deviations are large, the surface is rough; if they are small, the surface is smooth. A roughness value can either be calculated on a profile (line) or on a surface (area). Amplitude parameters, such as the root mean square roughness (Rms), characterize the surface based on the vertical deviations of the roughness profile from the mean line.

In the context of the present invention, the term "root mean square roughness" or "Rms" refers to the root mean square average of profile height deviations from the mean line measured by atomic force microscope (AFM), particularly over a SiO₂/Si substrate in a 2 × 2 µm² area, preferably performed with a CoreAFM Microscope by Nanosurf. The root mean square roughness (Rms) of bare graphene (non-functionalized) is around 1.00 nm.

Therefore, the deviation values (±) of the surface roughness (Rms) of the mixed functionalized graphene structure of the present invention is expressed respect to the surface roughness, measured as Rms, of bare graphene prepared by the same way as the mixed functionalized graphene structure but without functionalization.

It has been observed that the mixed functionalized graphene structure of the present invention presents a surface roughness, measured as Rms, that is similar to that of bare graphene (non-functionalized graphene) which is around 1.00 nm.

In particular, the mixed functionalized graphene structure of the present invention has a surface roughness, measured as Rms, between around 0.01±1.00 nm (that is, between around 0.99 and around 1.01 nm) and around 0.25±1.00 nm (that is, between around 0.75 nm and around 1.25 nm), wherein Rms is measured by atomic force microscopy (AFM).

In a particular embodiment, the functionalized graphene structure as described herein has a surface roughness (Rms) between around 0.05±1.00 nm (that is, between around 0.95 and around 1.05 nm) and around 0.20±1.00 nm (that is, between around 0.80 and around 1.20 nm), preferably is around 0.15±1.00 nm (that is, between around 0.85 and around 1.15 nm), respect to the surface roughness (Rms) of non-functionalized graphene, wherein Rms is measured by atomic force microscopy (AFM).

Without being bound to any theory in particular, it is believed that the mixed coverage of the functionalized graphene structure as described herein, having a similar surface roughness in comparison with bare graphene (non-functionalized graphene), causes a better interaction of biomolecules to the graphene surface due to the ability to assemble biomolecules in a controlled way and forming a homogeneous monolayer of biomolecules functionalized onto the graphene surface and, thus, by avoiding non-desirable interactions between graphene and the biomolecules (that decrease the adsorptive capacity) by the presence of pyrene groups of the PAH molecules. This could be explained by a uniform coating of graphene surface where, for example, PBASE molecules have been deposited first and later in the remaining gaps were filled by pyrenes molecules. As a result, the biomolecules covalently bond to the ester groups of PBASE molecules with a favourable distance and conformation for their target recognition in biosensors.

### Method for preparing the mixed functionalized graphene structure

Another aspect of the present invention is a method for preparing a FET comprising a mixed functionalized graphene structure described herein.

In particular, the method of the present invention comprises a step (a) of incubating sequentially the PBASE molecules and the molecules of at least one type of PAH compounds, the PAH being pyrene, over the graphene surface and washing the resulting functionalized graphene structure, wherein the molar ratio between the PBASE and the at least one type of PAH is between 1:5 and 5:1.

The PBASE molecules incubation is performed by well-known methods as described, for example, in: G. Wu et al., "Graphene field-effect transistors-based biosensors for Escherichia coli detection," 2016 IEEE 16th International Conference on Nanotechnology (IEEE-NANO), Sendai, Japan, 2016, 22-25; in Y. Ohno et al., "Label-free aptamer-based immunoglobulin sensors using graphene field-effect transistors," Japanese Journal of Applied Physics 2011, 50, 070120; and in G. Seo et al., "Rapid detection of COVID-19 causative virus (SARS-CoV-2) in human nasopharyngeal swab specimens using field-effect transistor- based biosensor," ACS Nano 2020, 14, 5135-5142. For example, a graphene structure is soaked in a PBASE solution in methanol for 1 h at room temperature and then rinsed several times with a phosphate-buffered saline solution and deionized water. A skilled person knows how these steps are to be performed so no further elucidations are needed.

The PAH compound molecules incubation can be performed by the same methods as explained above for PBASE molecules incubation. Thus, for example, a graphene structure is soaked in a pyrene solution in methanol for 1 h at room temperature and then rinsed several times with a phosphate-buffered saline solution and deionized water.

In a preferred embodiment, methanol, dimethylformamide (DMF) or a mixture of methanol and DMF, preferably a mixture of methanol and DM, is used as solvent to soak the molecules during incubation, in order to avoid chemical reactions that could damage the graphene surface.

Washing should be performed after every incubation step.

The PBASE molecules and the molecules of at least one type of PAH compounds in step (a) are incubated sequentially over the graphene surface. The term "sequentially" refers to first incubating the PBASE molecules or the molecules of at least one type of PAH compound over the graphene surface, and afterwards washing the resulting functionalized graphene surface; and subsequently incubating the molecules of at least one type of PAH compound or the PBASE molecules, respectively, over the previously resulting graphene surface, and afterwards washing the resulting functionalized graphene surface.

In a particular embodiment, in step (a), the PBASE molecules are first incubated over the graphene surface and subsequently the molecules of at least one type of PAH compound.

In another particular embodiment, in step (a), the molecules of at least one type of PAH compounds are first incubated over the graphene surface and subsequently the PBASE molecules.

In yet another particular embodiment, in step (a), the molar ratio between the PBASE and the at least one type of PAH compound is 5:1.

In yet another particular embodiment, the PBASE molecules are incubated at a concentration between mM and 10 mM and, more preferably at a concentration of 10 mM.

In yet another particular embodiment, the molecules of at least one type of PHA compounds are incubated at a concentration between 0.5 mM and 2 mM and, more preferably at a concentration of 2 mM.

The method of the present invention further comprises a step (b) of incubating biomolecules over the graphene surface of the graphene structure resulting from the previous step, and washing the resulting functionalized graphene structure.

The biomolecules incubation can be performed by the same methods as explained above for PBASE molecules and PHA molecules incubation. Thus, for example, a functionalized graphene structure is exposed to a 100 µg/mL antibody solution for 4 h at room temperature and then rinsed several times with a phosphate-buffered saline solution and deionized water.

Another aspect of the present invention, is a FET comprising a mixed functionalized graphene structure obtainable or obtained by a method as described herein.

Said mixed functionalized graphene structure obtainable or obtained by a method as described herein comprises:
- a graphene surface;
- 1-pyrenebutanoic acid succinimidyl ester (PBASE) molecules;
- molecules of at least one type of polycyclic aromatic hydrocarbon (PAH) compounds, the PAH compound being pyrene; and
- biomolecules;

wherein both the molecules of PBASE and the molecules of at least one type of PAH compounds are non-covalently linked to the graphene surface,
wherein the biomolecules are linked to the PBASE molecules, and
wherein the mixed functionalized graphene structure has a surface roughness (Rms) between around 0.01±1.00 µm and around 0.25±1.00 µm respect to the surface roughness of non-functionalized graphene, wherein Rms is measured by atomic force microscopy (AFM).

The chemical functionalization of graphene surface is improved by the method as described herein. In particular, it has been observed that the mixed functionalized graphene structure obtainable or obtained by a method as described herein presents a surface roughness, measured as Rms, that is similar to that of bare graphene (non-functionalized graphene) which is around 1.00 nm.

Without being bound to any theory, it is believed that the mixed coverage of the functionalized graphene structure as described herein forms a uniform coating of graphene surface where, for example, PBASE molecules have been deposited first and later in the remaining gaps were filled by pyrenes molecules. As a result, the PAH molecules establish π-π stacking with graphene surface and PBASE molecules are more packed and organized to biomolecules which will react covalently with the ester groups of PBASE molecules. Consequently, the biomolecules adopt favourable distance and conformation at their binding sites which are more suitable for their target recognition (such as pathogens) in biosensors.

### Field-Effect Transistor (FET) chip

Another aspect of the present invention is directed to a field-effect transistor (FET) chip, wherein said chip comprises a mixed functionalized graphene structure as described herein.

The term "field-effect transistor (FET)" refers to a type of transistor that uses an electric field to control the flow of current. FETs are elements, such as chips, with three terminals: source (S), gate (G), and drain (D). FETs control the flow of current by the application of a voltage to the gate, which in turn alters the conductivity between the drain and source.

A non-limiting example of a GFET according to the present invention is shown in Figure 1.

The term "Field-Effect Transistor (FET) chip" (also known as "chip field-effect transistor" (Bio-FET or BioFET)" or "field-effect chip" (FEB)) is a FET that consists of two main compartments: one is a bio-sensitive layer, that can specifically detect biomolecules, and the other is the FET. In the present invention, the bio-sensitive layer is a graphene channel (structure), inserted between the source and the drain of the FET. The graphene is exposed to enable functionalization of the channel surface and binding of receptor molecules to the channel surface. The surface of the graphene channel is functionalized by binding receptor molecules for the specific target of interest. The FET acts as a transducer separated by an insulating layer from the bio-sensitive layer comprising biological recognition elements (e.g., receptors or probe molecules), which are selective to the target molecule called analyte. Once the analyte binds to the recognition element, the charge distribution at the surface changes with a corresponding change in the electrostatic surface potential of the semiconductor (graphene). This change in the surface potential of the semiconductor acts like a gate voltage, changing the amount of current that can flow between the source (S) and drain (D) electrodes. This change in current (or conductance) can be measured, thus the binding of the analyte can be detected. The precise relationship between the current and analyte concentration depends on the region of transistor operation.

Thus, the FET chip of the present invention comprises a mixed functionalized graphene structure as described herein. In particular, the FET chip of the present invention comprises a mixed functionalized graphene structure as described herein, supported in an insulating layer, wherein the functionalized graphene structure supported in the insulating layer is bridging the two metal electrodes (S) and (D), and wherein the third electrode (G) is directly connected to the insulating layer.

In a particular embodiment, the functionalized graphene structure used for the FET chip described herein comprises itself the insulating material and a mixed functionalized graphene layer supported in said insulating material. In this particular embodiment, the mixed functionalized graphene structure can be used in the FET chip described herein.

In the FET chip of the present invention, the two metal electrodes (S) and (D) are spacing each other. Any metal is appropriate for preparing the electrodes (S) and (D). Examples of suitable metal can include, but are not limited to, aluminium, chromium, titanium, gold, palladium and alloys thereof.

Furthermore, the gate (G) electrode in the FET biosensor of the present invention is preferably a silicon layer.

The insulating layer in the FET chip of the present invention is any suitable insulating material. Examples of suitable insulating materials include, but are not limited to, silicon dioxide, hafnium oxide and silicon nitrate.

In a particular embodiment, the FET chip of the present invention can comprise a plurality of mixed functionalized graphene structures as described herein, supported on an insulating layer, each of them bridging two metal electrodes (S) and (D), and a third electrode (G) connected to the insulating layer.

### Electronic device and method for biological sample analysis

Another aspect of the present invention is directed to an electronic device for biological sample analysis, characterized in that it comprises at least one FET chip as described above.

In particular, the electronic device for biological sample analysis described herein comprises at least one FET chip as described above, wherein the at least one FET chip is electrically coupled to an external connector, the external connector configured to supply drain-source voltage, to supply gate-source bias, and to measure source current.

The electronic device for biological sample analysis described herein may further comprise a sample chamber to bring the biological sample in contact with the at least one FET chip comprising the mixed functionalized graphene structure, as biological sample sensor, comprised in said device. In a particular embodiment, the sample chamber comprises an aperture and the aperture contacts and forms a liquid-tight seal with the biological sample sensor, such that when a biological sample is introduced to the sample chamber, the biological sample contacts the top surface of the biological sample sensor.

In a preferred embodiment, the electronic device for biological sample analysis as described herein is a biosensor.

In another particular embodiment, the electronic device for biological sample analysis described herein further comprises a casing, wherein the casing encapsulates the sample chamber and the biological sample sensor.

Another aspect of the present invention is directed to a method for electronic biological sample analysis.

In particular, the method for electronic biological sample analysis described herein comprises a step (a) of introducing a biological sample to be analysed in a device as described above, to bring the biological sample in contact with the functionalized graphene structure comprised in said device.

In a particular embodiment, the biological sample to be analysed is introduced in a sample chamber as defined above to bring the biological sample in contact with the mixed functionalized graphene structure comprised in the device.

The term "biological samples" refers to any material, including without limitation, blood, serum, fluid and tissue biopsy samples, collected from study subjects, and any tangible material directly or indirectly derived there from.

The method for electronic biological sample analysis described herein further comprises a step (b) of applying a voltage to the device.

In a particular embodiment, the voltage is applied to an external connector electrically coupled to the device, wherein the external connector configured to supply drain-source voltage, to supply gate-source bias, and to measure source current.

The method for electronic biological sample analysis described herein further comprises a strep (c) detecting a change of the conductive properties of the functionalized graphene structure, resulting in a change of the electric signal of the said device.

A skilled person knows how these steps are to be performed, so no further elucidations are needed.

Finally, an embodiment of the present invention is directed to the use of the mixed functionalized graphene structure as defined herein in FET biosensors.

All the features described in this specification (including the claims, description and drawings) and/or all the steps of the described method can be combined in any way, with the exception of combinations of such mutually exclusive features and/or steps.

The invention will be further illustrated by means of examples, which should not be interpreted as limiting the scope of the claims.

### EXAMPLES

### Preparation of PBASE/pyrene functionalized graphene chips

Graphene was transferred to a SiO₂/Si substrate using conventional wet-transfer methods. Poly(methyl methacrylate) (PMMA) was spin-coated at 500 rpm for 10 s and at 2500 rpm for 60s onto graphene on Cu foil. PMMA/graphene on Cu foil was etched in CE-100 copper etchant. After the Cu foil was etched, the PMMA/graphene layer were cleaned into a deionized water (DIW) bath, and the copper etchant was washed away. Subsequently, the PMMA/graphene layer was transferred to a SiO₂/Si substrate and dried under ambient conditions overnight. The PMMA layer was removed in an acetone bath for 2 h, followed by isopropyl alcohol washing and drying under a stream of N₂ gas.

The transferred graphene was patterned by optical lithography, etching and metallization.

The device dimensions were 100 × 100 µm² (L × W) and the contacts were passivated by a polymer coating.

PBASE (1-pyrenebutanoic acid succinimidyl ester) functionalization was performed by immersion. In particular, the fabricated graphene-based chip was positioned in a petri dish filled with PBASE dissolved in a mixture of methanol and dimethylformamide (DMF).

The chip was fully covered by the PBASE in methanol/DMF solution for several hours at room temperature. Afterwards the chip was in pyrene dissolved in methanol/DMF for several hours at room temperature. Afterwards the chip was rinsed with the solvent

Table 1 shows mixed functionalization of graphene-based chip performed with PBASE and pyrene and different methodology. In particular, there are 2 differentiated groups, in which the concentrations of PBASE and pyrene are in a 5:1 ratio and the two methodologies are "dissolved together" that means that both, PBASE and pyrene were mixed in the same test tube and are simultaneously added. On the other hand, the wording "sequentially" in the methodology column refers to functionalizing both chemicals in independent incubation steps.

In order to understand the functionalization process, some control chips were carried out. In particular, there are 4 chips in which only PBASE and other in which only pyrene were added. Additionally, to this table a bare chip without any surface modification was analyzed as another control chip (chip 14, bare graphene).

Chip 2 is in accordance with the present invention. Chip 1 as well as Chips 10-14 are not in accordance with the present invention.

**Table 1. Functionalization of graphene-based chips.**

| **Chip N°** | **[PBASE]** | **[pyrene]** | **Methodology** |
|---|---|---|---|
| 1 | 5mM | 2mM | Simultaneously |
| 2 | 5mM | 2mM | Sequentially |
| 10 | 5mM | - | Only PBASE (CONTROL) |
| 11 | 2mM | - | Only PBASE (CONTROLs) |
| 12 | - | 5mM | Only pyrene (CONTROL) |
| 13 | - | 2mM | Only pyrene (CONTROL) |
| 14 | - | - | Bare graphene |

### AFM characterization

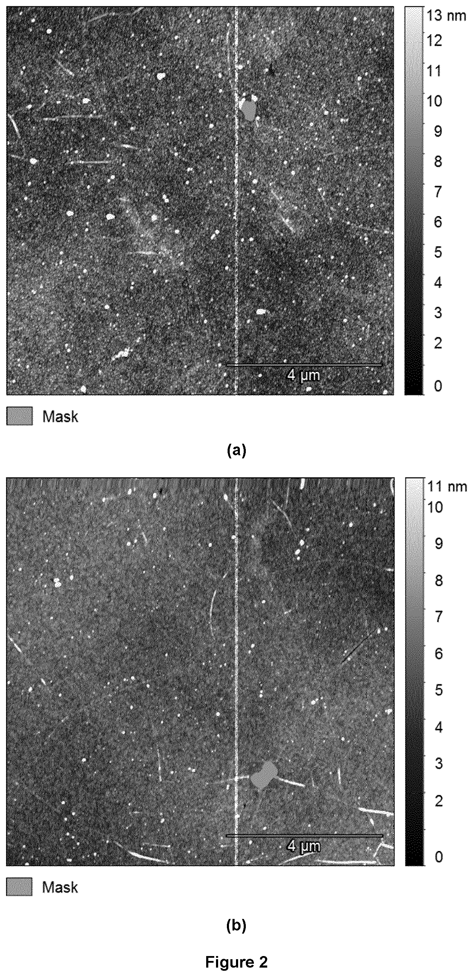

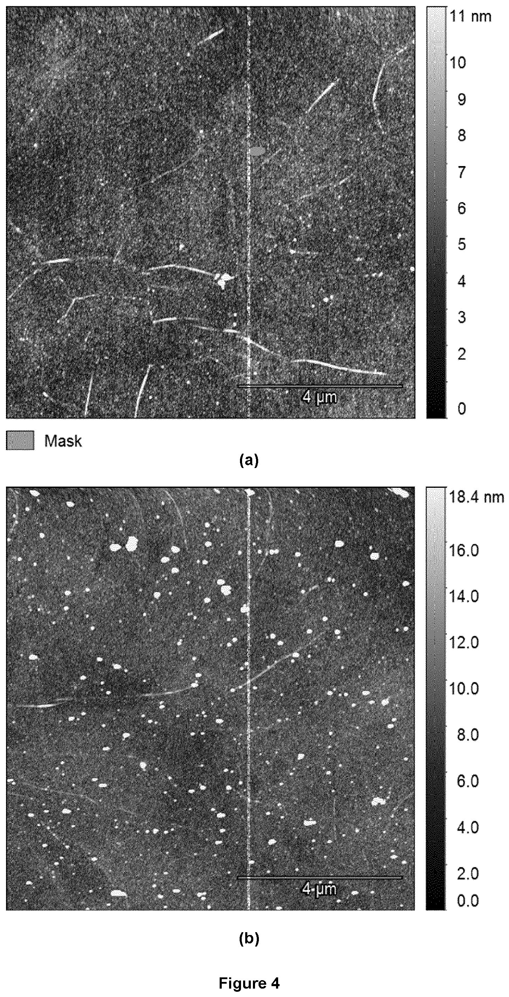

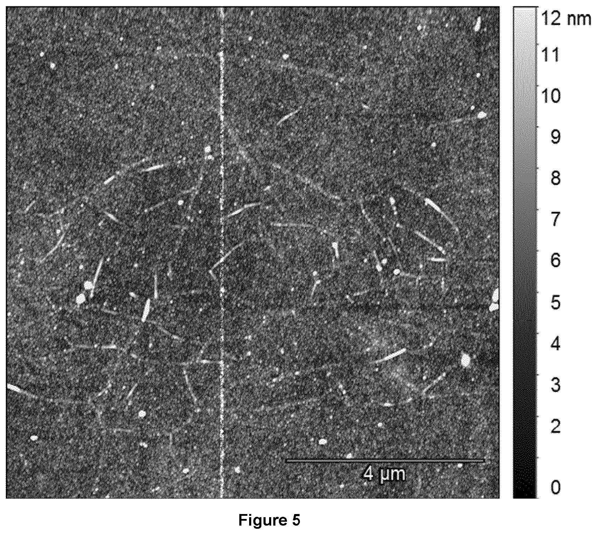

Surface roughness analysis of the previously prepared functionalized graphene-based chips were conducted by atomic force microscopy (AFM). Mapping images were analyzed from 10 × 10 µm² area and 2 × 2 µm² area of the graphene-based chips (Figures 2-5). See Table 2, wherein Ra is Average roughness and Rms is the root mean square roughness.

**Table 2. AFM analysis**

| **Chip N°** | **Functionalization type** | **10x10 µm²** | | **2x2 µm²** | |
|---|---|---|---|---|---|
| | | **Ra** | **Rms** | **Ra** | **Rms** |
| 14 | Bare graphene | 1,49 | 2,20 | 1,14 | 1,50 |
| 10 | Graphene + 5mM PBASE | 0,79 | 1,15 | 0,51 | 0,68 |
| 11 | Graphene + 2mM PBASE | 1,22 | 2,00 | 1,95 | 1,29 |
| 12 | Graphene + 5mM pyrene | 1,63 | 3,43 | 1,28 | 1,90 |
| 13 | Graphene + 2mM pyrene | 1,24 | 1,63 | 1,00 | 1,26 |
| 1 | Graphene + 5mM PBASE + 2mM pyrene (simultaneously) | 1,74 | 3,65 | 1,45 | 3,17 |
| 2 | Graphene + 5mM PBASE + 2mM pyrene (sequentially) | 1,35 | 1,90 | 1,08 | 1,46 |

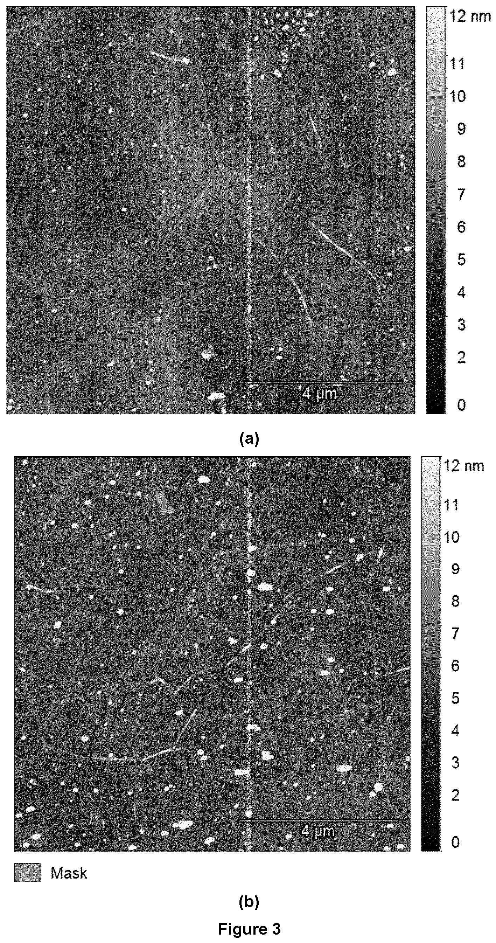

Chip 10 functionalized only with a 5mM solution of PBASE showed lower roughness (in both 10 x 10µm² and 2 x 2 µm² images) with respect to the bare substrate (chip 14). This could be explained due to a total coating of the graphene surface. In addition, chip 12 functionalized only with a 5mM solution of pyrene showed an excessively high roughness value, which could be explained due to pyrene stack creating a multilayer of aromatic rings when covering the graphene surface. This hypothesis could be supported by Figure 3(b) wherein small agglomerations are observed.

On the other hand, chips 1, 2, 11 and 13 showed an increased roughness with respect to the bare substrate (chip 14). This confirmed that the graphene surface was functionalized. The most favorable result was obtained for chip 2 (sequential methodology - PBASE and pyrene) for which the roughness remained similar to that of the bare substrate (chip 14). This could be explained by a uniform coating of graphene surface where PBASE molecules have been deposited first and later in the remaining gaps were filled by pyrenes molecules.After these results it was observed that the more favorable ratio PBASE:pyrene was 5:1 (5mM:2mM) and with a sequential methodology. In addition, it was observed a better and more homogeneous coating of the functionalization with the developed methodology than compared with graphene functionalized only with PBASE or with the simultaneous methodology, which resulted in a more favourable structure for the antibody immobilization.

### Immobilization of antibodies on functionalized graphene

Immobilizations of antibodies in the surface of previously prepared functionalized graphene-based chips were performed. In particular, SARS-CoV-2 (2019 nCov) Spike S1 antibody (Ab) (Ref. 410150-R007) was used as biomolecule. The graphene-based chips previously functionalized were incubated with an antibody concentration of 100 µg/ml during 4h at room temperature. Then, cleaning steps were carried out with PBS (phosphate-buffered saline) and DIW.

**Table 3. Functionalization concentrations and roughness results.**

| **Sample ID** | **Linker functionalization** | **Biomolecule immobilization** | **5x5 µm²** | | **2x2 µm²** | |
|---|---|---|---|---|---|---|
| | | | **Ra** | **Rms** | **Ra** | **Rms** |
| Chip 15 | Bare graphene | - | 0.83 | 1.19 | 0.55 | 0.77 |
| Chip 16 | PBASE 10mM | Antibody 100µg/ml | 0.74 | 1.51 | 0.68 | 1.09 |
| Chip 17 | PBASE 10 mM + Pyrene 2mM Sequentially | Antibody 100µg/ml | 0.60 | 1.17 | 0.47 | 0.64 |

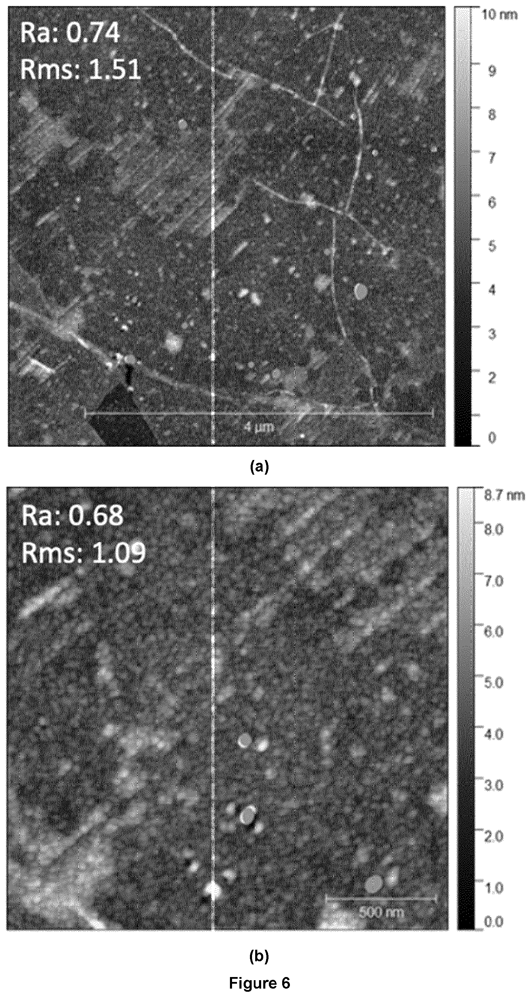

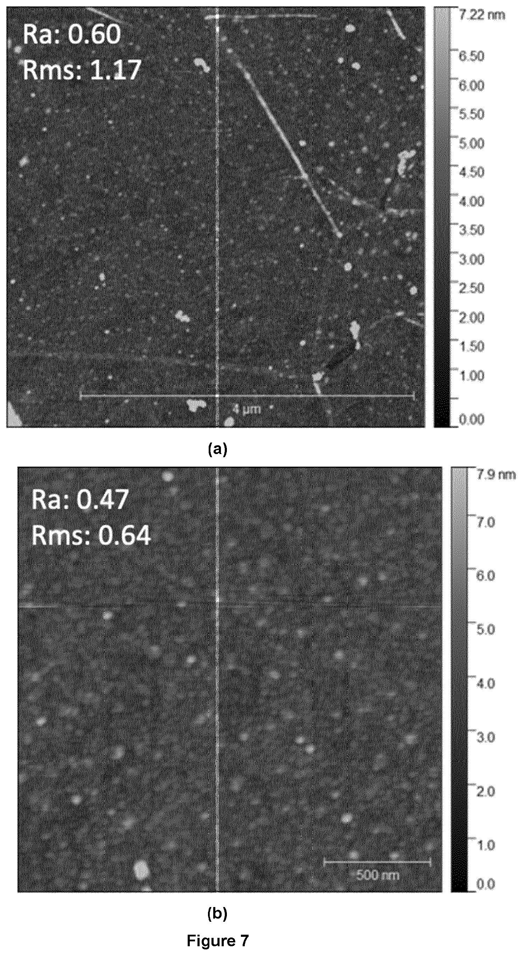

As shown in the AFM images (Figures 6 and 7) after antibody immobilization, it is observed an heterogenous coating on graphene functionalized only with PBASE versus a more homogeneous coating when the graphene is mixed functionalized with PBASE and pyrene by sequentially incubation in a 5:1 ratio.

The functionalization only with PBASE and the antibody immobilization shows higher roughness due to the heterogeneous coating and disorganized antibody immobilization. In case of mixed functionalization, the coverage is more homogeneous because the roughness decreases significatively due to a more organized biomolecules onto the surface. In the case of simultaneous incubation of PBASE and pyrene, both functionalization and antibody immobilization also give an heterogenous coverage and roughness increase due to agglomerates formation (data not shown).

Chip 17 is in accordance with the present invention. Chips 15 and 16 are not in accordance with the present invention.

### XPS measurements

XPS experiments were performed in a SPECS Sage HR 100 spectrometer with a non-monochromatic X-ray source (Magnesium Kα line of 1253.6 eV energy and 252 W), placed perpendicular to the analyzer axis and calibrated using the 3d_{5/2} line of Ag with a full width at half maximum (FWHM) of 1.1 eV.

**Table 4. Description of chips for XPS measurements**

| **Sample ID** | **Description** |
|---|---|
| Chip 11 | Bare graphene |
| Chip 14 | Graphene + PBASE |
| Chip 13 | Graphene + PBASE + Ab |
| Chip 18 | Graphene + PBASE + Pyrene (sequentially) |
| Chip 17 | Graphene + PBASE + Pyrene + Ab |
| Chip 20 | Graphene + [PBASE + Pyrene] (simultaneous) |
| Chip 19 | Graphene + [PBASE + Pyrene] + Ab |

**Table 5. Atomic composition percentage of the elements in the samples.**

| | **C [at%]** | **O [at%]** | **Si [at%]** | **N [at%]** |
|---|---|---|---|---|
| **Chip 11** | 34.7 | 38.9 | 26.4 | - |
| **Chip 14** | 42.1 | 34.5 | 23.0 | 0.4 |
| **Chip 13** | 46.2 | 29.4 | 17.0 | 7.4 |
| **Chip 18** | 39.6 | 35.8 | 24.3 | 0.3 |
| **Chip 17** | 40.3 | 35.1 | 22.9 | 1.6 |
| **Chip 20** | 40.1 | 35.6 | 24.0 | 0.3 |
| **Chip 19** | 45.3 | 32.1 | 19.9 | 2.6 |

The atomic composition percentage of elements shows that the chip 17 that is mixed 20 functionalized and with antibody immobilized gives more constant composition in comparison with its analogue sample without antibody. This confirms a stable, packed and ordered functionalized surface.

**Table 6. N 1s 1s high resolution spectra**

| **Sample ID** | **Fitting N 1s N-C/Amide (BE.eV)[at%]** | **Fitting N 1s NH+ (BE.eV)[at%]** |
|---|---|---|
| **Chip 11** | - | - |
| **Chip 14** | - | - |
| **Chip 13** | 399.9 [94.0] | 401.8 [6.0] |
| **Chip 18** | - | - |
| **Chip 17** | 399.9 [89.5] | 402.2 [10.5] |
| **Chip 20** | - | - |
| **Chip 19** | 400.0 [93.8] | 402.0 [6.2] |

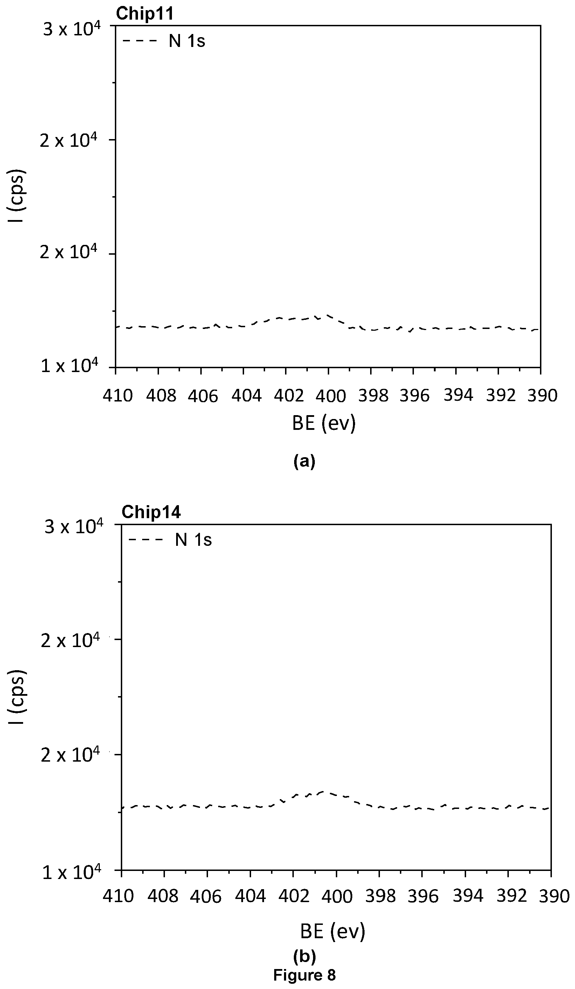

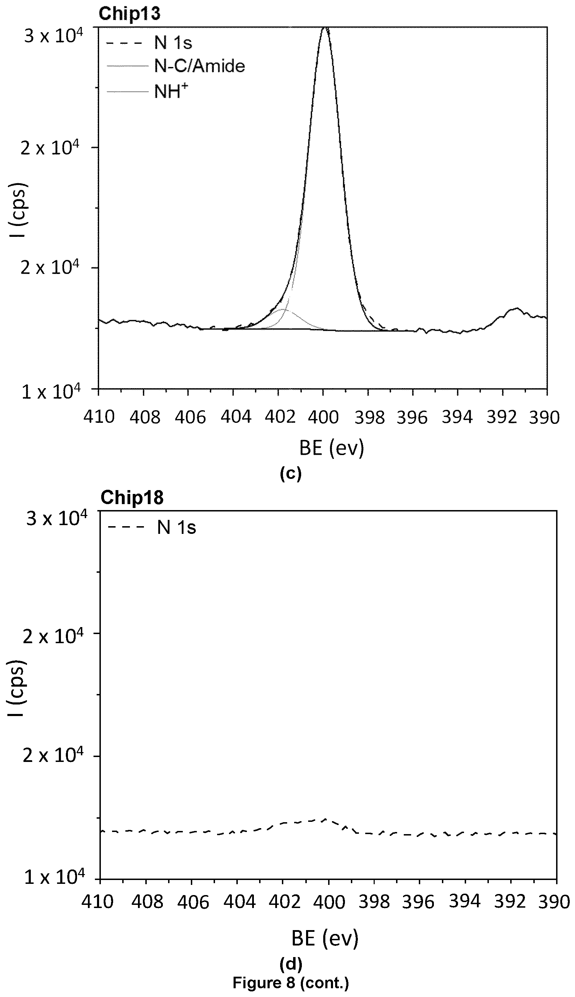

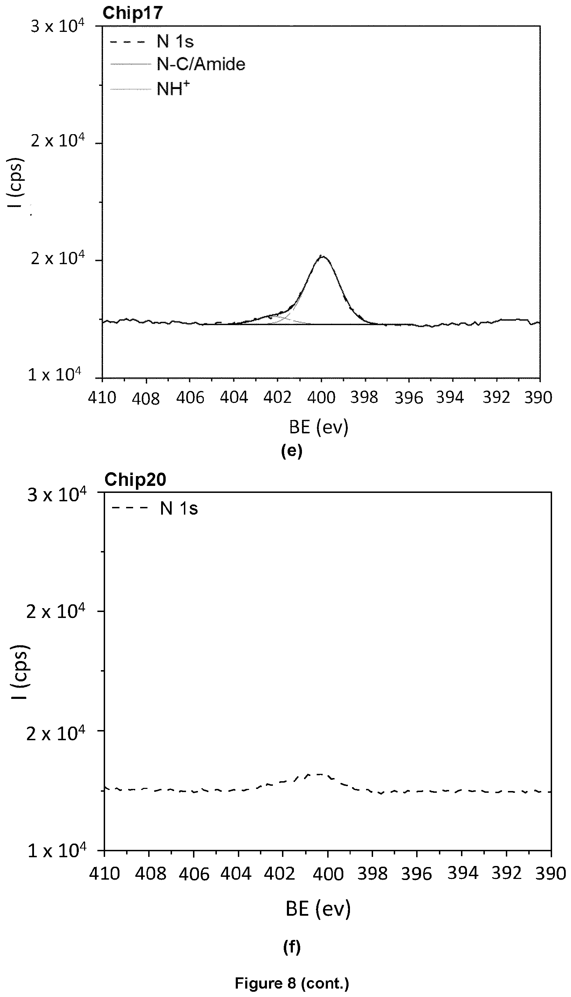

It was observed (Figure 8) highest N1s signal when the antibody is immobilized directly on the graphene functionalized with PBASE, also a high signal appears in case of the mixed functionalization when PBASE and PAH molecules are dissolved together and incubated simultaneously. In contrast to, an intermediate N1s signal was observed in the case of sequentially functionalization of PBASE and PAH that corresponds to a less amount of antibody on the surface that means that there is a less reaction between the PBASE and amine groups from the antibody forming amide bonds (89.5% as shown in table 6). This shows the advantages of this mixed organized procedure to biofunctionalized graphene, since, as it was previously explained herein, the ordered functionalization arranges the PBASE groups in a good manner to react with the antibodies (or biomolecules) in a less amount but in a better way. This "less" amount turns out in an organized disposition of antibodies without or with less steric hindrance, giving a stable and standard electric signal.

This stabilization of functionalized graphene FETs is a first key step to work with this FET chips as detection devices. These results also correspond with the homogeneous coverage observed in AFM images.

Chip 17 is in accordance with the present invention. Chips 11, 13, 14 as well as Chips 18-20 are not in accordance with the present invention.

### Electrical measurements

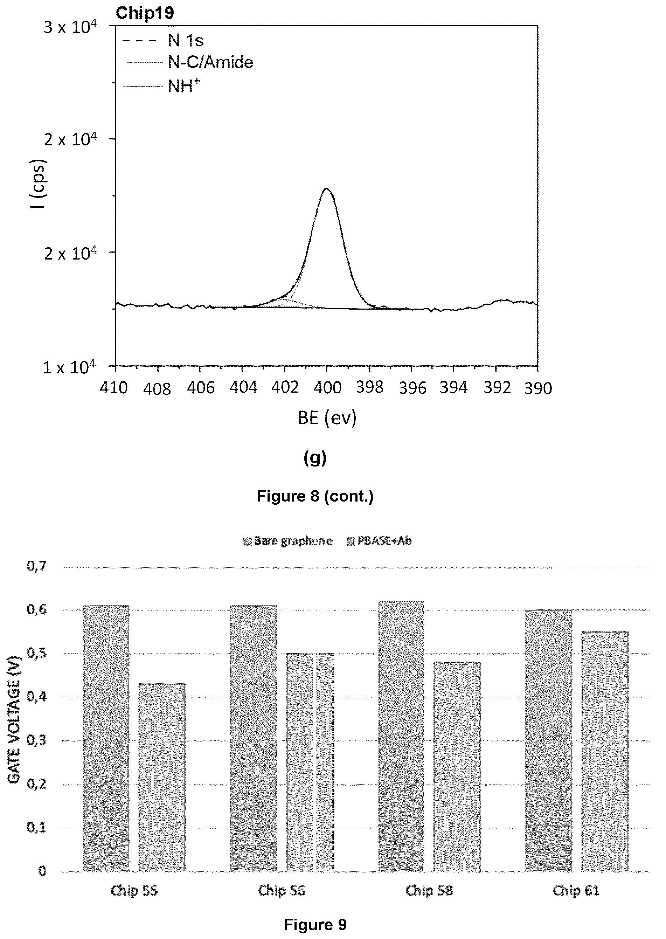

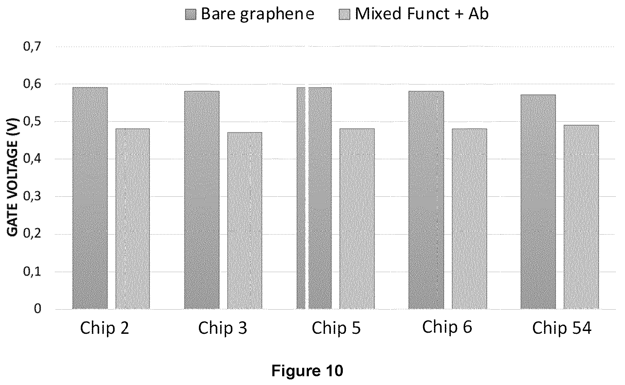

Sensing characterization were carried out by electrical measurements (Figures 9 and 10), including the transfer curves and current-voltage (*I_{D}-V_{D}*) curves, were carefully carried out at room temperature using a semiconductor analyzer (Keithley Instruments). The transfer curves of the graphene-based FET were measured after functionalization and immobilization processes. After PBASE functionalization, a negative shift is observed in all the devices measured. In case of devices functionalized with only PBASE it was observed variations in the voltage shift when the antibody is immobilized in these devices. Devices functionalized with only PBASE and antibody show non-reproducible transfer curves, therefore it is difficult to standardized the antibody shift value.

In the case of mixed functionalization, it was possible to obtain reproducible transfer curves, after fully functionalization (PBASE + Pyrene + antibody). A constant Dirac Point (DP) shift from bare graphene and after mixed functionalized graphene was observed. Chips2, 3, 5, 6 and 54 are in accordance with the present invention. Chips 55, 56, 58 and 61 are not in accordance with the present invention.

**Table 7. Description of chips of electrical measurements**

| **Sample ID** | **PBASE Functionalization + antibody** | **Mixed functionalization (sequentially) + antibody** |
|---|---|---|
| Chip 55 | x | |
| Chip 56 | x | |
| Chip 58 | x | |
| Chip 61 | x | |
| Chip 2 | | x |
| Chip 3 | | x |
| Chip 5 | | x |
| Chip 6 | | x |
| Chip 54 | | x |

## Claims

1. Method for preparing a Field-Effect Transistor (FET) chip comprising a mixed functionalized graphene structure, wherein the mixed functionalized graphene structure comprises:
- a graphene surface;
- 1-pyrenebutanoic acid succinimidyl ester (PBASE) molecules;
- molecules of at least one type of polycyclic aromatic hydrocarbon (PAH) compounds, the PAH compound being pyrene; and
- biomolecules;
wherein both the molecules of PBASE and the molecules of pyrene are non-covalently linked to the graphene surface,
wherein the biomolecules are linked to the PBASE molecules, and
wherein the mixed functionalized graphene structure has a surface roughness (Rms) between around 0.75 nm and around 1.25 nm, wherein Rms is measured by atomic force microscopy (AFM) over a SiO₂/Si substrate in a 2 × 2 µm² area and it is expressed respect to a bare graphene having a Rms value of around 1.00 nm,
wherein the method comprises the following steps:
a) incubating sequentially the PBASE molecules and the molecules of pyrene over the graphene surface and washing the resulting graphene structure, wherein the molar ratio between the PBASE and pyrene is between 1:5 and 5:1; and
b) incubating the biomolecules over the graphene surface of the graphene structure resulting from the previous step and washing the resulting functionalized graphene structure.

2. The method according to claim 1, wherein the molar ratio between the PBASE and pyrene in step (a) is 5:1.

3. The method according to any of claims 1 or 2, wherein the PBASE molecules are incubated at a concentration between 2 mM and 10 mM.

4. The method according to any of claims 1 to 3, wherein the molecules of pyrene are incubated at a concentration between 0.5 mM and 2 mM.

5. A FET chip comprising a mixed functionalized graphene structure obtainable by the method according to any of claims 1 to 4, **characterized in that** the mixed functionalized graphene structure comprises:
- a graphene surface;
- 1-pyrenebutanoic acid succinimidyl ester (PBASE) molecules;
- molecules of at least one type of polycyclic aromatic hydrocarbon (PAH) compounds, the PAH compound being pyrene; and
- biomolecules;
wherein both the molecules of PBASE and the molecules of pyrene are non-covalently linked to the graphene surface,
wherein the biomolecules are linked to the PBASE molecules, and
wherein the mixed functionalized graphene structure has a surface roughness (Rms) between around 0.75 nm and around 1.25 nm, wherein Rms is measured by atomic force microscopy (AFM) over a SiO₂/Si substrate in a 2 × 2 µm² area and it is expressed respect to a bare graphene having a Rms value of around 1.00 nm.

6. The FET chip comprising the functionalized graphene structure according to claim 5, wherein the biomolecules are antibodies.

7. An electronic device for biological sample analysis **characterized in that** it comprises at least one FET chip according to any one of claims 5 or 6 as component.

8. The electronic device for biological sample analysis according to claim 7, wherein said device is a biosensor.

9. Method for electronic biological sample analysis comprising:
a) introducing a biological sample to be analyzed in a device according to claim 8 to bring the biological sample in contact with the mixed functionalized graphene structure comprised in the FET chip of said device;
b) applying a voltage to the device; and
c) detecting a change of the conductive properties of the functionalized graphene structure comprised in the FET chip resulting in a change of the electric signal of the said device.

10. Use of the FET chip comprising the mixed functionalized graphene structure according to any of claims 5 or 6 in FET biosensors.

## Patentansprüche

1. Verfahren zum Herstellen eines Feldeffekttransistor(FET)-Chips, der eine gemischte funktionalisierte Graphenstruktur umfasst, wobei die gemischte funktionalisierte Graphenstruktur umfasst:
- eine Graphenoberfläche;
- 1-Pyrenbutansäuresuccinimidylester(PBASE)-Moleküle;
- Moleküle mindestens eines Typs polyzyklischer aromatischer Kohlenwasserstoff(PAH)-Verbindungen, wobei die PAH-Verbindung Pyren ist; und
- Biomoleküle;
wobei sowohl die Moleküle von PBASE als auch die Moleküle von Pyren nichtkovalent an die Graphenoberfläche gebunden sind,
wobei die Biomoleküle an die PBASE-Moleküle gebunden sind, und
wobei die gemischte funktionalisierte Graphenstruktur eine Oberflächenrauheit (Rms) zwischen etwa 0,75 nm und etwa 1,25 nm aufweist, wobei Rms durch Atomkraftmikroskopie (AFM) über einem SiO₂/Si-Substrat in einer Fläche von 2 x 2 µm² gemessen wird und in Bezug auf ein blankes Graphen mit einem Rms-Wert von etwa 1,00 nm ausgedrückt wird,
wobei das Verfahren die folgenden Schritte umfasst:
a) sequentielles Inkubieren der PBASE-Moleküle und der Pyrenmoleküle über der Graphenoberfläche und Waschen der resultierenden Graphenstruktur, wobei das Molverhältnis zwischen der PBASE und Pyren zwischen 1:5 und 5:1 liegt; und
b) Inkubieren der Biomoleküle über der Graphenoberfläche der aus dem vorherigen Schritt resultierenden Graphenstruktur und Waschen der resultierenden funktionalisierten Graphenstruktur.

2. Verfahren nach Anspruch 1, wobei das Molverhältnis zwischen dem PBASE und Pyren in Schritt (a) 5:1 beträgt.

3. Verfahren nach einem der Ansprüche 1 oder 2, wobei die PBASE-Moleküle in einer Konzentration zwischen 2 mM und 10 mM inkubiert werden.

4. Verfahren nach einem der Ansprüche 1 bis 3, wobei die Pyrenmoleküle in einer Konzentration zwischen 0,5 mM und 2 mM inkubiert werden.

5. FET-Chip, der eine gemischte funktionalisierte Graphenstruktur umfasst, die durch das Verfahren nach einem der Ansprüche 1 bis 4 erhältlich ist, **dadurch gekennzeichnet, dass** die gemischte funktionalisierte Graphenstruktur umfasst:
- eine Graphenoberfläche;
- 1-Pyrenbutansäuresuccinimidylester(PBASE)-Moleküle;
- Moleküle mindestens eines Typs polyzyklischer aromatischer Kohlenwasserstoff(PAH)-Verbindungen, wobei die PAH-Verbindung Pyren ist; und
- Biomoleküle;
wobei sowohl die Moleküle von PBASE als auch die Moleküle von Pyren nichtkovalent an die Graphenoberfläche gebunden sind,
wobei die Biomoleküle an die PBASE-Moleküle gebunden sind, und
wobei die gemischte funktionalisierte Graphenstruktur eine Oberflächenrauheit (Rms) zwischen etwa 0,75 nm und etwa 1,25 nm aufweist, wobei Rms durch Atomkraftmikroskopie (AFM) über einem SiO₂/Si-Substrat in einer Fläche von 2 x 2 µm² gemessen wird und in Bezug auf ein blankes Graphen mit einem Rms-Wert von etwa 1,00 nm ausgedrückt wird.

6. FET-Chip, der die funktionalisierte Graphenstruktur umfasst, nach Anspruch 5, wobei die Biomoleküle Antikörper sind.

7. Elektronische Einrichtung zur Analyse biologischer Proben, **dadurch gekennzeichnet, dass** sie mindestens einen FET-Chip nach einem der Ansprüche 5 oder 6 als Komponente umfasst.

8. Elektronische Einrichtung zur Analyse biologischer Proben nach Anspruch 7, wobei die Einrichtung ein Biosensor ist.

9. Verfahren zur elektronischen Analyse biologischer Proben, umfassend:
a) Einführen einer zu analysierenden biologischen Probe in eine Einrichtung nach Anspruch 8, um die biologische Probe mit der in dem FET-Chip der Einrichtung enthaltenen gemischten funktionalisierten Graphenstruktur in Kontakt zu bringen;
b) Anlegen einer Spannung an die Einrichtung; und
c) Detektieren einer Änderung der leitenden Eigenschaften der in dem FET-Chip enthaltenen funktionalisierten Graphenstruktur, was zu einer Änderung des elektrischen Signals der Einrichtung führt.

10. Verwendung des FET-Chips, der die gemischte funktionalisierte Graphenstruktur umfasst, nach einem der Ansprüche 5 oder 6 in FET-Biosensoren.

## Revendications

1. Méthode pour préparer une puce à transistor à effet de champ (FET) comprenant une structure de graphène fonctionnalisé mixte, dans laquelle la structure de graphène fonctionnalisé mixte comprend :
- une surface de graphène ;
- des molécules d'ester succinimidylique d'acide 1-pyrènebutanoïque (PBASE) ;
- des molécules d'au moins un type de composé hydrocarboné aromatique polycyclique (PAH), le composé PAH étant le pyrène ; et
- des biomolécules ;
dans laquelle tant les molécules de PBASE que les molécules de pyrène sont liées de manière non covalente à la surface de graphène,
dans laquelle les biomolécules sont liées aux molécules de PBASE, et
dans laquelle la structure de graphène fonctionnalisé mixte a une rugosité de surface (Rms) comprise entre environ 0,75 nm et environ 1,25 nm, dans laquelle la Rms est mesurée par microscopie à force atomique (AFM) sur un substrat en SiO₂/Si dans une zone de 2 × 2 µm² et est exprimée par rapport à un graphène nu ayant une valeur de Rms d'environ 1,00 nm,
dans laquelle la méthode comprend les étapes suivantes :
a) l'incubation séquentielle des molécules de PBASE et des molécules de pyrène sur la surface de graphène et le lavage de la structure de graphène résultante, dans laquelle le rapport molaire entre le PBASE et le pyrène est compris entre 1/5 et 5/1 ; et
b) l'incubation des biomolécules sur la surface de graphène de la structure de graphène résultant de l'étape précédente et le lavage de la structure de graphène fonctionnalisé résultante.

2. Méthode selon la revendication 1, dans laquelle le rapport molaire entre le PBASE et le pyrène dans l'étape (a) est de 5/1.

3. Méthode selon l'une quelconque des revendications 1 et 2, dans laquelle les molécules de PBASE sont incubées à une concentration comprise entre 2 mM et 10 mM.

4. Méthode selon l'une quelconque des revendications 1 à 3, dans laquelle les molécules de pyrène sont incubées à une concentration comprise entre 0,5 mM et 2 mM.

5. Puce à FET comprenant une structure de graphène fonctionnalisé mixte pouvant être obtenue par la méthode selon l'une quelconque des revendications 1 à 4, **caractérisée en ce que** la structure de graphène fonctionnalisé mixte comprend :
- une surface de graphène ;
- des molécules d'ester succinimidylique d'acide 1-pyrènebutanoïque (PBASE) ;
- des molécules d'au moins un type de composé hydrocarboné aromatique polycyclique (PAH), le composé PAH étant le pyrène ; et
- des biomolécules ;
dans laquelle tant les molécules de PBASE que les molécules de pyrène sont liées de manière non covalente à la surface de graphène,
dans laquelle les biomolécules sont liées aux molécules de PBASE, et
dans laquelle la structure de graphène fonctionnalisé mixte a une rugosité de surface (Rms) comprise entre environ 0,75 nm et environ 1,25 nm, dans laquelle la Rms est mesurée par microscopie à force atomique (AFM) sur un substrat en SiO₂/Si dans une zone de 2 × 2 µm² et est exprimée par rapport à un graphène nu ayant une valeur de Rms d'environ 1,00 nm.

6. Puce à FET comprenant la structure de graphène fonctionnalisé selon la revendication 5, dans laquelle les biomolécules sont des anticorps.

7. Dispositif électronique pour l'analyse d'échantillons biologiques, **caractérisé en ce qu'**il comprend au moins une puce à FET selon l'une quelconque des revendications 5 et 6 en tant que composant.

8. Dispositif électronique pour l'analyse d'échantillons biologiques selon la revendication 7, dans lequel ledit dispositif est un biocapteur.

9. Méthode d'analyse électronique d'échantillons biologiques comprenant :
a) l'introduction d'un échantillon biologique à analyser dans un dispositif selon la revendication 8 afin de mettre l'échantillon biologique en contact avec la structure de graphène fonctionnalisé mixte comprise dans la puce à FET dudit dispositif ;
b) l'application d'une tension au dispositif ; et
c) la détection d'un changement des propriétés conductrices de la structure de graphène fonctionnalisé comprise dans la puce à FET, résultant en un changement du signal électrique dudit dispositif.

10. Utilisation de la puce à FET comprenant la structure de graphène fonctionnalisé mixte selon l'une quelconque des revendications 5 et 6 dans des biocapteurs à FET.
